# EUROPÄISCHE PATENTSCHRIFT

(11) **EP 0 473 897 B1**
(45) Veröffentlichungstag und Bekanntmachung des Hinweises auf die Patenterteilung: **19.10.1994**
(21) Anmeldenummer: 91110814.0
(22) Anmeldetag: 29.06.1991
(51) Int. Cl.: F16F 13/00

(54) **Elastisches Gummilager**
Elastic rubber mounting
Support élastique en caoutchouc

(30) Priorität: 01.09.1990 DE 4027808
(43) Veröffentlichungstag der Anmeldung: 11.03.1992
(73) Patentinhaber: Boge GmbH, D-53783 Eitorf (DE)
(72) Erfinder: Quast, Jörn-Rainer, W-5485 Sinzig-Bad Bodendorf (DE)

(56) Entgegenhaltungen:
- EP-A- 0 088 682
- DE-A- 3 225 700
- DE-A- 3 841 194
- US-A- 4 733 854
- US-A- 4 854 561

## Beschreibung

Die Erfindung bezieht sich auf ein elastisches Gummilager bestehend aus einem Innenteil, einem dazu mit Abstand angeordneten Außenteil und dazwischen eingesetztem Gummiteil, welches zusammen mit dem Innenteil und dem Außenteil einen Hohlraum bildet, der mit Flüssigkeit gefüllt ist, wobei die Kraftübertragung zwischen dem Innenteil und dem Außenteil überwiegend durch die Flüssigkeit erfolgt, dabei weist das Innenteil im Bereich der Verbindung mit dem Gummiteil eine in etwa kugelförmig verlaufende Oberfläche auf, das Außenteil umschließt im Bereich dieser Verbindung das Innenteil mit Abstand, wobei in mindestens einer Druckrichtung ein Gummielement vorgesehen ist, welches ausschließlich am Außenteil befestigt ist und sich am Innenteil über die Flüssigkeit abstützt.

Derartige elastische Lager (z.B. DE-OS 38 41 194) sind axial auf Zug und/oder Druck belastbar und lassen kardanische Belastungen bei sehr geringen Rückstellkräften zu. Bei dem mit Flüssigkeit gefüllten Hohlraum übernimmt die Flüssigkeit in der Hauptbelastungsrichtung die entsprechenden Tragkräfte. Allerdings ist weder eine hydraulische Dämpfung noch eine Entkopplung von Schwingungen vorgesehen.

Es sind elastische Lager bekannt (z.B. US-PS 2.562.195), bei denen die ringförmigen Hohlräume von einem im Querschnitt winkelförmigen äußeren Ring und einem inneren Ring aus Elastomermaterial begrenzt werden, wobei der innere Ring beider Hohlräume als ein gemeinsamer Ring ausgebildet ist. Zusätzlich jedoch begrenzt aber auch die Buchse und das Tragelement die Hohlräume, so daß insgesamt eine Einheit vorhanden ist, die in zwei Kammern unterteilt ist. Nachteilig ist jedoch, daß dieses Lager axial statisch nur wenig belastbar ist. In radialer Richtung ist ebenfalls nur ein relativ kleiner Federweg möglich.

Darüber hinaus sind Gummilager (z.B. US-PS 4.733.854) bekannt, bei denen der mit Flüssigkeit gefüllte Hohlraum durch eine Trennwand in zwei Teilräume unterteilt ist. Die Trennwand ist dabei im Zentrum mit einem Innenteil und radial außen mit einem Außenteil verbunden. Das Gummilager ist dabei auf Druck und Zug belastbar, jedoch würden kardanische Auslenkungen nur mit großen Rückstellmomenten ausführbar sein.

Aufgabe der Erfindung ist es, ein elastisches Gummilager so auszubilden, das axial auf Zug und/oder Druck belastbar ist und das kardanische Bewegungen bei sehr geringen Rückstellmomenten zuläßt.

Zur Lösung dieser Aufgabe ist erfindungsgemäß vorgesehen, daß der Hohlraum über eine, eine Drosselstelle aufweisende Trennwand in zwei Teilräume unterteilt ist, wobei die Trennwand mit ihrem Außenumfang in der Innenwand des Außenteiles aufgenommen ist.

Vorteilhaft ist bei dieser Ausbildung, daß sowohl das Gummiteil als auch die Flüssigkeit mit statischen Kräften beaufschlagt werden können. Durch Verwendung einer speziellen geometrischen Form bzw. der Konstruktion des Gummiteiles kann eine entsprechende Traglast ausgelegt werden, wobei kardanische Bewegungen problemlos ausgeführt werden können. Bei diesen kardanischen Bewegungen wird das Gummiteil vorwiegend in Scherrichtung beansprucht. Das Gummiteil ist in Scherrichtung weicher als in Druckrichtung, so daß aus diesem Grund nur geringe Rückstellmomente wirken. Durch die Unterteilung des Hohlraumes in zwei, über eine Drosselstelle miteinander verbundene Teilräume läßt sich noch zusätzlich eine Dämpfung erzielen.

Desweiteren ist von Vorteil, daß die Montage des Lagerelementes unter einer axial in Zugrichtung wirkenden Kraft auf das Innenteil erfolgen kann. Hierdurch entsteht zum einen ein überdruck in der Flüssigkeit, durch den der Einsatz der Kavitation positiv verschoben wird. Desweiteren wird bei einer Druckeinfederung, also der entgegengesetzten Richtung, der Zuganteil im Gummiteil 3, bedingt durch die Vorspannung, reduziert.

In Ausgestaltung der Erfindung ist vorgesehen, daß die Drosselstelle als Bohrung ausgebildet ist.

Nach einem weiteren wesentlichen Merkmal ist vorgesehen, daß die Drosselstelle spiralförmig um die Längsachse verlaufend angeordnet ist.

Nach einer besonders günstigen fertigungstechnischen Ausführungsform weist die Trennwand eine Aussperung auf, in die eine elastische Membran eingesetzt ist.

In weiterer Ausgestaltung der Erfindung erfolgt die Montage des Innenteiles unter Zugkraft. Hierbei ist von Vorteil, daß der nach der Montage sich einstellende überdruck den Beginn einer eventuell auftretenden Kavitation verschiebt. Darüber hinaus werden beim Einfedern des Lagers Zugspannungen reduziert.

Bevorzugte Ausführungsbeispiele sind in den Zeichnungen schematisch dargestellt.

Es zeigt:
Figur 1 ein elastisches Gummilager im Schnitt
Figur 2 eine Variante des in Figur 1 dargestellten Gummilagers.

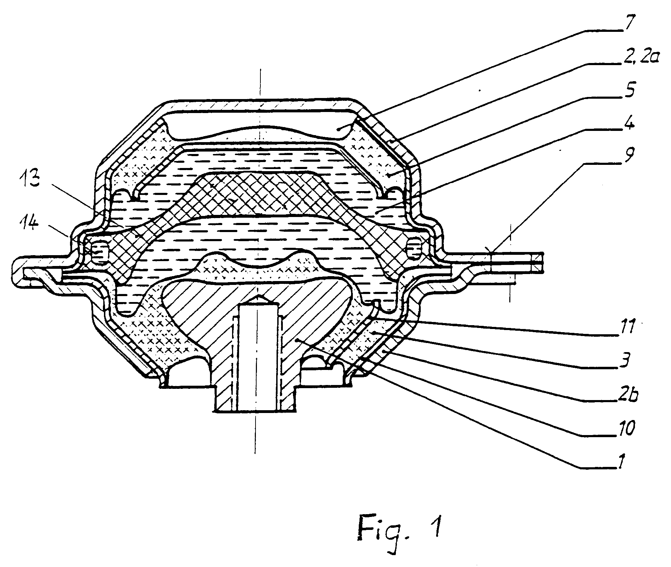

Das in Figur 1 dargestellte elastisches Gummilager besteht im wesentlichen aus dem Innenteil 1, dem Außenteil 2 und dem dazwischen eingesetztem Gummiteil 3. Das Innenteil 1, das Gummiteil 3 und das Außenteil 2 bilden einen Hohlraum 4, der mit Flüssigkeit gefüllt ist. Das Außenteil 2 besteht aus den beiden Einzelteilen 2a und 2b. Dabei ist das Gummiteil 3 am Innenteil 1 und am Außenteil 2b anvulkanisiert. Gegebenenfalls kann noch ein Zwischenblech 10 vorgesehen werden.

Das Gummiteil 3 nimmt in Zug- und Druckrichtung entsprechende Kräfte auf, während die Flüssigkeit im Hohlraum 4 der übertragung von Druckkräften dient. Das Gummiteil 3 verläuft über den gesamten Umfang des Innenteiles 1 und des Außenteiles 2. Das Gummiteil 3 kann zusätzlich ein Armierungsteil 11 aufweisen.

Statische und dynamische Belastungen können durch das Gummielement 5 elastisch aufgefangen werden.Das Gummielement 5 ist hierzu am Außenteil 2a über ein Zwischenblech anvulkanisiert und ist mit einem Metallteil 6 versehen, so daß der Druck über eine entsprechend große Fläche des Metallteiles 6 auf das Gummielement 5 übertragen werden kann. Zwischen dem Metallteil 6 und dem Außenteil 2 befindet sich die luft- oder gasgefüllte Kammer 7.

Die Außenteile 2a und 2b bilden den Befestigungsflansch 9, in den gegebenenfalls Befestigungslöcher einbringbar sind.

Die Trennwand 13 unterteilt den Hohlraum 4 in zwei Teilräume 4a und 4b, wobei zur Erzeugung einer Dämpfungskraft eine Drosselstelle 14 in Form einer Bohrung oder eines über dem Umfang verlaufenden Kanales vorgesehen ist.

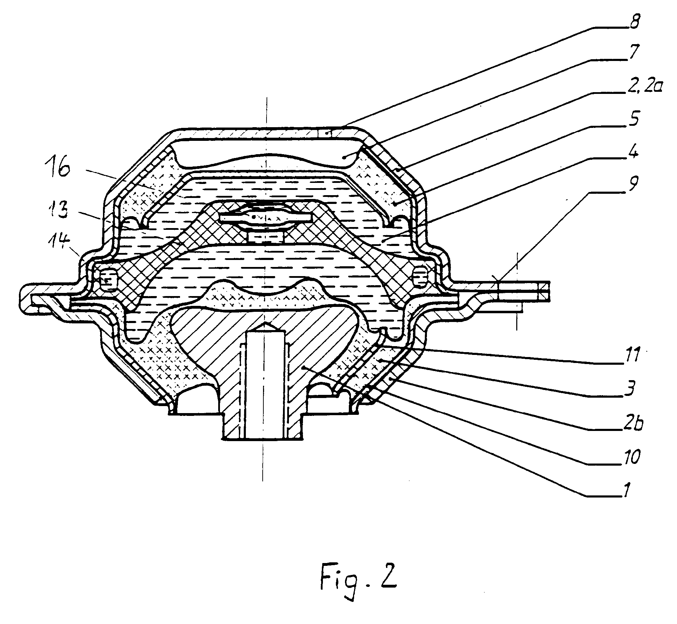

In der Figur 2 ist eine Ausführungsform des in Figur 1 gezeigten Gummilagers dargestellt, mit dem Unterschied, daß die Kammer 7 nach außen zur Atmosphäre über die Bohrung 8 des Außenteiles 2 entlüftet ist, so daß sich in der Kammer 7 kein Druck aufbauen kann, und daß eine Trennwand 13 mit einer Membran 16 zur Entkopplung vorgesehen ist. Die Membran 16 ist dabei in einer Aussparrung 15 dicht, aber beweglich aufgenommen. Als Drosselstelle 14 ist ein spiralförmig verlaufender Kanal vorgesehen.

### Bezugszeichenliste

- 1 -: Innenteil
- 2 -: Außenteil
- 3 -: Gummiteil
- 4 -: Hohlraum
- 5 -: Gummielement
- 6 -: Metallteil
- 7 -: Kammer
- 8 -: Bohrung
- 9 -: Befestigungsflansch
- 10 -: Zwischenblech
- 11 -: Armierungsteil
- 12 -: Dichtung
- 13 -: Trennwand
- 14 -: Drosselstelle
- 15 -: Aussparung
- 16 -: Membran

## Patentansprüche

1. Elastisches Gummilager bestehend aus einem Innenteil (1), einem dazu mit Abstand angeordneten Außenteil (2) und dazwischen eingesetztem Gummiteil (3), welches zusammen mit dem Innenteil (1) und dem Außenteil (2) einen Hohlraum (4) bildet, der mit Flüssigkeit gefüllt ist, wobei die Kraftübertragung zwischen dem Innenteil (1) und dem Außenteil (2) überwiegend durch die Flüssigkeit erfolgt, dabei weist das Innenteil (1) im Bereich der Verbindung mit dem Gummiteil (3) eine in etwa kugelförmig verlaufende Oberfläche auf, das Außenteil (2) umschließt im Bereich dieser Verbindung das Innenteil (1) mit Abstand, wobei in mindestens einer Druckrichtung ein Gummielement (5) vorgesehen ist, welches ausschließlich am Außenteil (2) befestigt ist und sich am Innenteil (1) über die Flüssigkeit abstützt,
dadurch gekennzeichnet,
daß der Hohlraum (4) über eine, eine Drosselstelle (14) aufweisende Trennwand (13) in zwei Teilräume (4a und 4b) unterteilt ist, wobei die Trennwand (13) mit ihrem Außenumfang in der Innenwand des Außenteiles (2) aufgenommen ist.

2. Gummilager nach Anspruch 1,
dadurch gekennzeichnet,
daß die Drosselstelle (14) als Bohrung ausgebildet ist.

3. Gummilager nach Anspruch 1,
dadurch gekennzeichnet,
daß die Drosselstelle (14) spiralförmig um die Längsachse verlaufend angeordnet ist.

4. Gummilager nach Anspruch 1,
dadurch gekennzeichnet,
daß die Trennwand (13) eine Aussparung (15) aufweist, in die eine elastische Membran (16) eingesetzt ist.

5. Gummilager nach Anspruch 1,
dadurch gekennzeichnet,
daß die Montage des Innenteiles unter Zugkraft erfolgt.

## Claims

1. Elastic rubber mounting comprising an inner member (1), an outer member (2) arranged spaced from it and a rubber component (3) inserted between them and forming with the inner member (1) and the outer member (2) a cavity (4) which is filled with fluid, the transmission of force between the inner member (1) and the outer member (2) taking place mainly through the fluid, and in this arrangement the inner member (1) having in the region of its connection to the rubber component (3) a surface which extends approximately spherically, the outer member (2) embracing, but with spacing, the inner member (1) in the region of this connection, a rubber element (5) being provided in at least a compression direction, this element being secured solely to the outer member (2) and engaging the inner member (1) through the fluid,
characterised in that
the cavity (4) is divided into two partial chambers (4a and 4b) by a dividing wall (13) having a restriction (14), the dividing wall (13) being received by its outer periphery in the inner wall of the outer member (2).

2. Rubber mounting according to claim 1,
characterised in that
the restriction (14) is in the form of a bore.

3. Rubber mounting according to claim 1,
characterised in that
the restriction (14) is arranged to extend spirally around the longitudinal axis.

4. Rubber mounting according to claim 1,
characterised in that
the dividing wall (13) has a recess (15) in which an elastic diaphragm (16) is inserted.

5. Rubber mounting according to claim 1,
characterised in that
the assembly of the inner member is performed under tension loading.

## Revendications

1. Support élastique en caoutchouc comprenant une pièce intérieure (1), une pièce extérieure (2) agencée à distance de celle-ci, et une pièce en caoutchouc (3) mise en place entre celles-ci, cette pièce en caoutchouc formant ensemble avec la pièce intérieure (1) et la pièce extérieure une cavité (4) qui est remplie de liquide, la transmission des efforts entre la pièce intérieure (1) et la pièce extérieure (2) étant principalement assurée par le liquide, la pièce intérieure (1) présentant dans la région de la liaison avec la pièce en caoutchouc (3) une surface approximativement sphérique, et la pièce extérieure (2) entourant la pièce intérieure (1) à distance dans la région de cette liaison, un élément en caoutchouc (5) étant prévu dans au moins une direction de compression, cet élément en caoutchouc étant fixé exclusivement sur la pièce extérieure (2) et s'appuyant via le liquide sur la pièce intérieure (1),
caractérisé en ce que la cavité (4) est subdivisée en deux cavités partielles (4a) et (4b) par une cloison de séparation (13) qui comporte un étranglement (14), la cloison de séparation (13) étant reçue par sa périphérie extérieure dans la paroi intérieure de la pièce extérieure (2).

2. Support en caoutchouc selon la revendication 1, caractérisé en ce que l'étranglement (14) est réalisé sous la forme d'un perçage.

3. Support en caoutchouc selon la revendication 1, caractérisé en ce que l'étranglement (14) s'étend en forme de spirale autour de l'axe longitudinal.

4. Support en caoutchouc selon la revendication 1, caractérisé en ce que la cloison de séparation (13) comporte un évidement (15) dans lequel est mise en place une membrane élastique (16).

5. Support en caoutchouc selon la revendication 1, caractérisé en ce que le montage de la pièce intérieure est effectué sous effort de traction.
